# FASCICULE DE BREVET EUROPEEN

(11) **EP 1 901 612 B1**
(45) Date de publication et mention de la délivrance du brevet: **19.10.2016**
(21) Numéro de dépôt: 06778857.0
(22) Date de dépôt: 11.07.2006
(51) Int. Cl.: A23C 9/123, A23C 9/12, A23B 7/10, A23C 11/10, A23L 2/02, A23L 11/30

(54) **PRODUITS ALIMENTAIRES FERMENTES CONTENANT DES SOUCHES PROBIOTIQUES, ET LEUR PROCEDE DE PREPARATION**
FERMENTIERTE LEBENSMITTELPRODUKTE MIT PROBIOTISCHEN STÄMMEN UND VERFAHREN ZU IHRER HERSTELLUNG
FERMENTED FOOD PRODUCTS CONTAINING PROBIOTIC STRAINS AND METHOD FOR PREPARING SAME

(30) Priorité: 13.07.2005 FR 0507528
(43) Date de publication de la demande: 26.03.2008
(73) Titulaire: COMPAGNIE GERVAIS DANONE, 75009 Paris (FR)
(72) Inventeur: TERRAGNO, Luc, F-92190 Meudon (FR); DEBRU, François, F-78000 Versailles (FR); TESSIER, Philippe, F-91120 Palaiseau (FR); HERVE, Stéphane, 92330 Sceaux (FR); BLACHON, Jean-Luc, F-94300 Bry-sur-Marne (FR)
(74) Mandataire: Grosset-Fournier, Chantal Catherine
(86) Numéro de dépôt international: PCT/FR2006/001687
(87) Numéro de publication internationale: WO 2007/006969

(56) Documents cités:
- EP-A- 0 281 467
- FR-A- 2 842 707
- US-A- 4 298 619
- DECHTER T H ET AL: "SURVIVABILITY AND BETA-GALACTOSIDASE ACTIVITY OF BIFIDOBACTERIA STORED AT LOW TEMPERATURES" FOOD BIOTECHNOLOGY, DEKKER, NEW YORK, NY, US, vol. 12, no. 1/2, 1998, pages 73-89, XP008039285 ISSN: 0890-5436

## Description

L'invention concerne des produits alimentaires fermentés contenant des souches probiotiques, et leur procédé de préparation.

Les bifidobactéries font partie de la flore anaérobie dominante du colon. Les principales espèces présentes dans le colon humain sont *Bifidobacterium adolescentis, Bifidobacterium bifidum, Bifidobacterium longum ssp infantis, Bifidobacterium breve, Bifidobacterium longum.*

Les bifidobactéries sont des bactéries probiotiques de choix. Des bactéries du genre *Bifidobacterium* sont utilisées dans de nombreux produits actuellement sur le marché et sont souvent ajoutées à des produits laitiers comprenant déjà les bactéries classiques du yaourt (*Streptococcus thermophilus* et *Lactobacillus bulgaricus*).

La consommation de bifidobactéries est reconnue comme étant bénéfique dans les processus de rétablissement de la population normale de bifidobactéries chez des personnes ayant subi une antibiothérapie. Cette consommation semble aussi permettre de réduire les constipations, de prévenir la survenue de diarrhée et de diminuer les symptômes de l'intolérance au lactose.

Les probiotiques sont des bactéries vivantes. L'utilisation de ces bactéries vivantes dans la fabrication de produits alimentaires tels que des produits laitiers est délicate notamment par rapport aux problématiques de survie de ces bactéries dans le produit.

80% des produits actuellement sur le marché qui contiennent des bifidobactéries ne respectent pas les critères permettant de soutenir qu'ils améliorent de façon significative le transit intestinal des personnes les consommant. Une prise journalière d'au moins 10⁸ à 10⁹ cellules viables a été recommandée comme dose minimale permettant d'avoir un effet thérapeutique (Silva A.M., Barbosa F. H., Duarte R., Vieira L. Q., Arantes R. M., Nicoli J. R., Effect of Bifidobacterium longum ingestion on experimental salmonellosis in mice, J. Appl. Microbiol. 97 (2004) 29-37). La dose requise peut être dépendante de la souche probiotique utilisée.

La demande FR 2 842 707 décrit un yaourt préparé par l'utilisation de bactéries lactiques constituées de Lactococcus *lactis subsp lactis* et Lactococcus *lactis subsp cremoris* en association avec des bactéries du genre Bifidobacterium choisi parmi B. *bifidum*, B. *longum,* B. *infantis,* B. *breve* et B. *animalis.* Le nombre de Bifidobactéries inoculées est de l'ordre de 10⁸ à 10⁹ et environ 10⁸ bifidobactéries sont dénombrées après trois jours. Aucune information concernant une durée de conservation plus longue n'est renseignée.

Le document Dechter et al. (Dechter T. H., Hoover D. G., Survivability and β-galactosidase activity of bifidobacteria stored at low temperatures, Food Biotechnol. 12 (1998) 73-89) évalue la capacité de survie des bifidobactéries et de maintien de l'activité beta-galactosidase de 6 espèces de *Bifidobacterium* dans un produit laitier fermenté ou non fermenté, à basse température de stockage. Le lait fermenté est préparé par inoculation initiale d'1% de différentes souches de *Bifidobacterium* à 37° C pendant 24 h ou 48 h puis stocké à 4°C. Après 14 jours de conservation à 4°C, une quantité de 1 à 3.10⁸ CFU/ml de bifidobactéries présentes dans un lait fermenté est dénombrée pour trois souches différentes, les autres souches testées présentant une quantité bien moindre, tandis que dans un lait non fermenté le nombre de bifidobactéries dénombrées n'excède pas 3,2.10⁷ CFU/ml.

Dans le cas de la fabrication d'un produit alimentaire bioactif contenant des bifidobactéries se pose donc le problème d'obtenir une population suffisante de ces bactéries dans le produit et de la maintenir au cours de la « vie » du produit.

Le problème de la taille numérique de la population de souches probiotiques dans un produit laitier fermenté est un problème connu (voir notamment D. Roy, Technological aspects related to the use of bifidobacteria in dairy products, Lait 85 (2005) 39-56, INRA, EDP Sciences).

Plusieurs raisons à ce problème ont été évoquées parmi lesquelles la diminution de la population pendant le stockage, la croissance perturbée de ces bactéries à partir d'un certain pH ou tout simplement la mauvaise capacité de croissance de ces bifidobactéries, en particulier dans le lait.

L'invention a principalement pour but de fournir des produits alimentaires fermentés non fermes contenant une forte population de bifidobactéries pendant toute la période de conservation desdits produits alimentaires fermentés, c'est à dire des produits alimentaires fermentés non fermes contenant des bifidobactéries en bon état physiologique et présentant un taux de survie important au cours de la période de conservation desdits produits alimentaires fermentés, en particulier jusqu'à la date limite de consommation des produits.

Un autre but de l'invention est de fournir des procédés de préparation simples à mettre en oeuvre permettant d'obtenir les produits ci-dessus.

Un autre but de l'invention est de favoriser la croissance des bifidobactéries par rapport aux symbioses classiques présentes dans les yaourts, ces symbioses étant constituées classiquement d'une ou plusieurs souches de *Streptococcus thermophilus* et de *Lactobacillus bulgaricus*.

Les buts de l'invention sont réalisés grâce à la constatation surprenante effectuée par les inventeurs qu'un réglage précis d'un certain nombre de paramètres intervenant classiquement dans les procédés de préparation de produits alimentaires fermentés non fermes permet d'obtenir rapidement après fermentation des populations d'au moins 10⁸ bifidobactéries par gramme de produit, et une survie accrue des bifidobactéries jusqu'à la date limite de consommation des produits, sans forcément modifier la croissance des autres souches bactériennes.

L'invention concerne un produit alimentaire fermenté non ferme contenant des ferments, lesquels contiennent des bactéries lactiques, comportant plus de 5.10⁷, en particulier plus de 10⁸ bifidobactéries par gramme de produit alimentaire fermenté pendant une période de conservation d'au moins 30 jours, en particulier d'au moins 35 jours.

Par « produit alimentaire fermenté non ferme » on entend un produit alimentaire fermenté qui a subi une étape de décaillage et / ou de lissage lors de son procédé de préparation et ce préalablement à son conditionnement.

Un produit alimentaire fermenté ferme est un produit qui est conditionné avant la fermentation, la fermentation intervenant dans le récipient de conditionnement. Ainsi, pour un produit laitier, le lait est ensemencé et directement conditionné dans des pots où il fermente. Après l'ensemencement, le lait ensemencé est conditionné en pots. Ces pots passent généralement à l'étuve pendant 3 heures. Les bactéries se reproduisent et consomment le lactose qui est alors transformé partiellement en acide lactique ce qui modifie la structure des protéines, formant ce que l'on appelle un gel lactique. Ensuite les produits passent en chambre froide ventilée ou en tunnel de refroidissement et sont stockés à environ 4°C.

Des exemples de produits alimentaires fermentés non fermes sont : les yaourts brassés ou les yaourts à boire.

Par « ferments » on entend un ensemble de bactéries, notamment des bactéries destinées à la fermentation et / ou des bactéries à valeur probiotique.

La période de conservation ou de stockage du produit alimentaire fermenté est la période qui suit immédiatement la fin de processus de préparation du produit alimentaire fermenté et son conditionnement. Lors de cette période de conservation le produit alimentaire fermenté est habituellement conservé à une température comprise entre 4 et 10 °C.

Le produit alimentaire fermenté susmentionné contient plus de 5.10⁷, en particulier plus de 10⁸ bifidobactéries par gramme de produit alimentaire fermenté en particulier pendant une période de conservation d'au moins 35 jours, et plus particulièrement pendant une période de conservation d'au moins 40 jours. Plus particulièrement le produit alimentaire fermenté susmentionné contient plus de 5.10⁷, en particulier plus de 10⁸ bifidobactéries par gramme de produit alimentaire fermenté jusqu'à la date limite de consommation du produit.

Les dates limites de consommation dépendent des durées légales de conservation fixées par la législation en vigueur, qui peuvent typiquement varier de 15 à 50 jours à partir de la date de fabrication. A titre d'exemple, la durée légale de conservation est généralement de 30 jours pour les produits laitiers frais.

Une population de bifidobactéries qui est supérieure ou égale à 10⁸ UFC/g à la date limite de consommation (D.L.C.) du produit conservé entre 4 et 10°C peut être considérée comme une population suffisante de bifidobactéries compte tenu des recommandations médicales concernant l'apport en bifidobactéries dans l'alimentation.

L'invention concerne plus particulièrement le produit alimentaire fermenté tel que défini ci-dessus, dans lequel le rapport entre le nombre de bifidobactéries contenues dans le produit alimentaire fermenté à l'issue de la période de conservation et le nombre de bifidobactéries contenues dans le produit alimentaire fermenté au début de la période de conservation d'au moins 30 jours, en particulier d'au moins 35 jours, est d'environ 0,2 à environ 0,8, en particulier d'environ 0,3 à environ 0,7, en particulier d'environ 0,4 à environ 0,5.

En d'autres termes le taux de survie des bifidobactéries contenues dans le produit alimentaire fermenté entre le début de la période de conservation (c'est à dire la fin du procédé de préparation) et la fin de la période de conservation est compris entre 20 et 80 %, en particulier entre 30 et 70 %, et en particulier entre 40 et 50 %.

Ladite période de conservation est d'au moins 30 jours, en particulier d'au moins 35 jours, mais plus particulièrement d'au moins 40 jours ou s'étend jusqu'à la date limite de consommation du produit alimentaire fermenté.

L'invention concerne également un produit alimentaire fermenté non ferme conservé pendant une période de conservation d'au moins 30 jours, en particulier d'au moins 35 jours, à une température de 4 à 10 °C, contenant des ferments comportant plus de 10⁸ bifidobactéries par gramme de produit alimentaire fermenté.

Plus particulièrement l'invention concerne un produit alimentaire fermenté non ferme conservé pendant une période de conservation d'au moins 30 jours, en particulier d'au moins 35 jours, en particulier d'au moins 40 jours, à une température de moins de 12°C ou de moins de 10°C, contenant des ferments comprenant plus de 5.10⁷, en particulier plus de 10⁸ bifidobactéries par gramme de produit alimentaire fermenté.

L'invention concerne plus particulièrement un produit alimentaire fermenté tel que défini ci-dessus, contenant plus de 5.10⁷, en particulier plus de 10⁸ bifidobactéries par gramme de produit alimentaire fermenté au début de la période de conservation.

Produit alimentaire fermenté selon l'une des revendications 1 à 4, dans lequel les bifidobactéries contenues dans le produit alimentaire fermenté sont du type *Bifidobacterium animalis,* notamment *Bifidobacterium animalis animalis* et / ou *Bidifobacterium animalis lactis,* et / ou *Bifidobacterium breve* et / ou *Bifidobacterium longum* et / ou *Bidifobacterium infantis* et / ou *Bidifobacterium bifidum*.

Avantageusement, le produit alimentaire fermenté tel que défini ci-dessus est préparé à base de jus végétal et notamment de jus de fruit ou de jus de légume tel que du jus de soja, ou de produit laitier, et notamment de lait de vache et / ou de lait de chèvre.

Ledit produit alimentaire fermenté peut également être à base de lait de brebis ou de lait de chamelle ou de lait de jument.

Par jus végétal on entend un jus réalisé à partir d'extraits végétaux, notamment de soja, de tonyu, d'avoine, de blé, de maïs...

Des exemples de jus de légume sont : le jus de tomate, le jus de betterave, le jus de carotte...

Des exemples de jus de fruit sont : le jus de pomme, d'orange, de fraise, de pêche, d'abricot, de prune, de framboise, de mûre, de groseille, d'ananas, de citron, d'agrume, de pamplemousse, de banane, de kiwi, de poire, de cerise, de fruit de la passion, de mangue, de fruit exotique, le jus multifruit...

Selon un mode de réalisation avantageux, le produit alimentaire fermenté tel que défini ci-dessus est tel que les ferments contiennent des bactéries lactiques, en particulier une ou des bactéries du genre *Lactobacillus spp.* et notamment *Lactobacillus delbrueckii bulgaricus* et / ou *Lactobacillus casei* et / ou *Lactobacillus reuteri* et / ou *Lactobacillus acidophilus* et / ou *Lactobacillus helveticus* et / ou *Lactobacillus plantarum*, et / ou des bactéries du type *Lactococcus cremoris* et / ou *Streptococcus thermophilus* et / ou *Lactococcus lactis* et / ou une ou des bactéries du genre *Learconostoc.*

Selon un mode de réalisation avantageux, le produit alimentaire fermenté tel que défini ci-dessus est tel que les ferments contiennent des bactéries lactiques qui présentent entre elles un phénomène symbiotique.

Par « phénomène symbiotique » on entend une relation entre différents types de bactéries lactiques qui sont capables de créer une assistance mutuelle entre elles et d'augmenter leurs activités de fermentation.

Selon un mode de réalisation avantageux, la proportion des bifidobactéries dans les ferments contenus dans le produit alimentaire fermenté tel que défini ci-dessus est d'environ 20 à environ 80 %, notamment d'environ 30 à environ 70 %, notamment d'environ 40 à environ 60 %, et notamment d'environ 50 %.

Par « proportion de bifidobactéries dans les ferments » on entend la proportion des bifidobactéries par rapport au nombre total de bactéries incluses dans le produit alimentaire fermenté, c'est à dire par rapport à l'ensemble des bifidobactéries et des autres bactéries, notamment les bactéries *Lactococcus, Lactobacillus*, *Streptococcus*...

Le bon équilibre numérique entre les bifidobactéries et les autres souches bactériennes dans le produit alimentaire fermenté à l'issue du procédé de préparation, et le maintien substantiel de cet équilibre tout au long de la période de conservation, sont des garants essentiels de la qualité du produit alimentaire.

Une proportion de 50 % de bifidobactéries constitue un bon compromis entre les problématiques de coût (les bifidobactéries coûtent cher) et les problématiques d'obtention d'une population correcte de bifidobactéries.

Selon un mode de réalisation particulier, le produit alimentaire fermenté selon l'invention se présente sous la forme d'un produit alimentaire fermenté brassé ou d'un produit alimentaire fermenté à boire ou d'un produit alimentaire fermenté infantile.

Par «produit [...] brassé » on entend un produit, notamment un lait, ensemencé, fermenté, brassé mécaniquement puis conditionné. La fermentation d'un tel produit ne s'effectue pas en pot mais en vrac, dans des cuves. Le caillé est brassé puis refroidi avant d'être conditionné en pots, qui sont stockés au froid. Par caillé on entend un coagulat de protéines notamment de lait.

Par «produit [...] à boire» on entend un produit sous forme substantiellement liquide. Un produit à boire est un produit qui est tel que, après l'étape de brassage mécanique, le produit est battu dans les cuves avant d'être conditionné.

Par «produit [...] infantile» on entend un produit adapté aux besoins du nourrisson, à faible teneur en protéines et en graisse.

Ledit produit alimentaire fermenté peut notamment être un yaourt ou un yoghourt ferme, brassé ou à boire ou une barre contenant de la matière laitière, du kéfir, un biscuit avec un fourrage laitier, une eau contenant des probiotiques...

Par ailleurs l'invention concerne également un procédé de préparation d'un produit alimentaire fermenté à partir d'une matière de départ, comprenant les étapes successives suivantes :
- une étape d'ensemencement d'une matière de départ, éventuellement pasteurisée, par inoculation de ferments d'ensemencement contenant de 4.10⁶ à 1.10⁷ bifidobactéries par ml de matière de départ, pour obtenir une matière ensemencée,
- une étape de fermentation de la matière ensemencée obtenue à l'étape précédente, telle que la température de début de fermentation est de 36 à 38°C, la température de fin de fermentation est de 37 à 39°C, et le temps de fermentation est de 8 à 11 heures, pour obtenir une matière fermentée,
- une étape de refroidissement intermédiaire de la matière fermentée obtenue à l'étape précédente, telle que le temps de refroidissement intermédiaire est de 1h30 à 2 heures et la température de refroidissement intermédiaire est de 4 à 18°C, pour obtenir une matière pré-refroidie,
- une étape de stockage de la matière pré-refroidie obtenue à l'étape précédente, telle que le temps de stockage est inférieur à 15 heures, pour obtenir une matière stockée,
- une étape de refroidissement final de la matière stockée obtenue à l'étape précédente, telle que la température de début de refroidissement final est inférieure à 21 °C et la température de fin de refroidissement final est de 2 à 6°C, de manière à obtenir un produit alimentaire fermenté.

Les ferments utilisés pour ensemencer la matière de départ sont généralement obtenus par croissance de bifidobactéries dans un milieu de culture et dans des conditions telles que quand la population de bifidobactéries arrive à confluence, elle contient 10⁸ à 10⁹ bifidobactéries par ml de milieu de culture. On constate donc que selon l'invention la quantité de ferments utilisée au départ correspond à environ 0,1% de la dose de bifidobactéries classiquement utilisée.

Par « fermentation » on entend une réaction biochimique qui consiste à libérer de l'énergie à partir d'un substrat organique, sous l'action de micro-organismes. Il s'agit d'un procédé de transformation d'une matière première par les micro-organismes, cette transformation produisant alors de la biomasse et des métabolites. En particulier, la fermentation lactique est un processus anaérobie de consommation du lactose par les bactéries des ferments, ce qui provoque la formation d'acide lactique et un abaissement du pH.

L'invention provient de la constatation surprenante effectuée par les inventeurs que le réglage des paramètres de temps, de température et de population initiale de bifidobactéries dans les gammes sus-citées, permet d'améliorer la résistance des bifidobactéries et leur capacité à survivre. Les bidifobactéries contenues dans le produit alimentaire fermenté à l'issue du procédé de préparation de l'invention sont dans un meilleur état physiologique que si lesdits paramètres sont fixés à des valeurs situées en dehors des gammes ci-dessus, ce qui permet à un plus grand nombre de ces bifidobactéries de survivre au cours de la conservation du produit alimentaire fermenté qui suit.

Par ailleurs, le réglage desdits paramètres dans les gammes sus-citées permet des économies substantielles, notamment de temps et d'énergie.

En s'écartant des gammes fixées selon l'invention, le taux de survie des bifidobactéries au cours de la conservation est défavorablement altéré.

Le procédé de préparation susmentionné permet l'obtention de produits alimentaires fermentés non fermes.

De façon avantageuse, les ferments contiennent des bactéries lactiques.

Selon un mode de réalisation particulier, le procédé de préparation d'un produit alimentaire fermenté selon l'invention est tel que les bifidobactéries sont choisies parmi les bactéries du type *Bifidobacterium animalis,* notamment *Bifidobacterium animalis animalis* et / ou *Bidifobacterium animalis lactis,* et / ou *Bifidobacterium breve* et / ou *Bifidobacterium longum* et / ou *Bifidobacterium infantis* et / ou *Bifidobacterium bifidum*.

Selon un mode de réalisation particulier, le procédé de préparation d'un produit alimentaire fermenté selon l'invention est tel que les bifidobactéries sont choisies parmi les bactéries du type *Bifidobacterium animalis.*

Avantageusement, le temps de refroidissement intermédiaire dans le procédé de préparation d'un produit alimentaire fermenté selon l'invention est de 1h30.

Avantageusement, le temps de stockage dans le procédé de préparation d'un produit alimentaire fermenté selon l'invention est inférieur ou égal à 12 heures, notamment est égal à 12 heures.

Avantageusement, la température de fin de refroidissement final dans le procédé de préparation d'un produit alimentaire fermenté selon l'invention est de 4°C.

Selon un mode de réalisation particulier du procédé de préparation d'un produit alimentaire tel que défini ci-dessus, les ferments d'ensemencement contiennent des bactéries lactiques, en particulier une ou des bactéries du genre *Lactobacillus spp.* et notamment *Lactobacillus delbrueckii bulgaricus* et / ou *Lactobacillus casei* et / ou *Lactobacillus reuteri* et / ou *Lactobacillus acidophilus* et / ou *Lactobacillus helveticus* et / ou *Lactobacillus plantarum,* et / ou des bactéries du type *Lactococcus cremoris* et / ou *Streptococcus thermophilus* et / ou *Lactococcus lactis* et / ou une ou des bactéries du genre *Learconostoc.*

De façon avantageuse, les bactéries lactiques présentent entre elles un phénomène symbiotique.

Selon un mode de réalisation particulier du procédé de préparation d'un produit alimentaire tel que défini ci-dessus, la proportion des bifidobactéries dans les ferments d'ensemencement est de 20 à 75 %, notamment de 30 à 50 %, notamment de 35 à 40 %, notamment de 37,5 %.

Par « proportion des bifidobactéries dans les ferments d'ensemencement », on entend la proportion des bifidobactéries par rapport à l'ensemble total des bactéries inoculées lors de l'étape d'ensemencement.

Cette proportion correspond à un optimum en terme de coût et de concentration finale de bifidobactéries étant donné que plus la concentration de bifidobactéries est élevée au départ, plus elles emportent la compétition en terme de croissance par rapport aux autres souches des ferments, et plus la concentration optimale de bifidobactéries est atteinte rapidement.

Selon un mode de réalisation particulier du procédé de préparation d'un produit alimentaire tel que défini ci-dessus, la matière de départ est à base de jus végétal et notamment de jus de fruit ou de jus de légume tel que du jus de soja, ou de produit laitier, constitué en particulier de lait de vache et / ou de lait de chèvre.

La matière de départ peut également comprendre du lait de brebis et / ou de chamelle et / ou de jument.

Dans le cas où le produit alimentaire fermenté est un produit laitier, la matière de départ peut comprendre du lait, de la poudre de lait, du sucre, un mélange de lait et de jus végétal, un mélange de lait et de jus de fruit, un mélange de lait et d'amidon.

Selon un mode de réalisation particulier, le procédé de préparation d'un produit alimentaire fermenté selon l'invention comporte une étape supplémentaire de brassage entre l'étape de fermentation et l'étape de refroidissement intermédiaire, permettant d'obtenir, à partir de la matière fermentée obtenue à l'étape de fermentation, une matière fermentée brassée.

Par « brassage » on entend un procédé d'agitation mécanique à l'aide d'un brasseur à turbine ou à hélice. Il s'agit d'une étape déterminante pour l'onctuosité du produit notamment laitier. Si le brassage est trop violent, il peut se produire une incorporation d'air et une séparation du sérum. Si le brassage est insuffisant, le produit risque de devenir ultérieurement trop épais.

Selon un mode de réalisation particulier, le procédé de préparation d'un produit alimentaire fermenté selon l'invention comporte une étape de pasteurisation avant l'étape d'ensemencement, permettant d'obtenir, à partir de la matière de départ, une matière de départ pasteurisée.

Par « pasteurisation » on entend la méthode usuelle dans le domaine de la conservation des aliments consistant en un chauffage rapide sans ébullition, suivi d'un refroidissement brusque, permettant la destruction de la plupart des bactéries tout en conservant partiellement les protéines.

Selon un mode de réalisation avantageux du procédé de préparation d'un produit alimentaire fermenté selon l'invention, la matière de départ pasteurisée est une matière de départ pasteurisée, chambrée, facultativement homogénéisée, et refroidie, obtenue à partir d'une matière brute, ledit procédé comprenant avant l'étape d'ensemencement les étapes successives suivantes :
- une étape de standardisation en matière grasse de la matière brute de manière à obtenir une matière standardisée,
- une étape d'enrichissement en matière sèche de la matière standardisée obtenue à l'étape précédente, de manière à obtenir une matière enrichie,
- une étape de pré-chauffage de la matière enrichie obtenue à l'étape précédente, de manière à obtenir une matière de départ,
- une étape de pasteurisation et de chambrage de la matière de départ obtenue à l'étape précédente, de manière à obtenir une matière pasteurisée et chambrée,
- une étape facultative d'homogénéisation de la matière pasteurisée et chambrée obtenue à l'étape précédente, de manière à obtenir une matière pasteurisée, chambrée et facultativement homogénéisée,
- une étape de refroidissement initial de la matière pasteurisée, chambrée et facultativement homogénéisée obtenue à l'étape précédente, de manière à obtenir une matière de départ pasteurisée, chambrée, facultativement homogénéisée, et refroidie.

Par « standardisation en matière grasse » on entend une étape de mise à niveau pré-déterminé de la quantité de matière grasse présente dans la matière de départ.

L'enrichissement en matière sèche consiste en l'ajout de protéines et de matière grasse pour modifier la fermeté du caillé.

Le chambrage consiste en une thermisation rapide du lait et permet de détruire la flore microbienne végétative, dont les formes pathogènes. Sa durée typique est de 4 à 10 minutes, notamment de 5 à 8 minutes, et notamment d'environ 6 minutes.

Par « homogénéisation » on entend la dispersion de la matière grasse dans la matière de type lait en petits globules gras. L'homogénéisation s'effectue par exemple à une pression de 100 à 280 bars, notamment de 100 à 250 bars, notamment de 100 à 200 bars, notamment d'environ 200 bars. Cette étape d'homogénéisation est purement facultative. Elle est notamment absente dans le processus de production de produits à 0 % de matière grasse.

Selon un mode de réalisation avantageux, le procédé de préparation d'un produit alimentaire fermenté selon l'invention comprend après l'étape de refroidissement final une étape de conservation du produit alimentaire fermenté à une température comprise entre 4 et 10 °C.

Selon un mode de réalisation avantageux, le procédé de préparation d'un produit alimentaire fermenté selon l'invention comprend une étape d'ajout d'une préparation intermédiaire simultanément à l'étape d'ensemencement ou entre l'étape d'ensemencement et l'étape de fermentation, de manière à obtenir, à partir de la matière ensemencée, une matière ensemencée complétée, ou après l'étape de fermentation, de manière à obtenir, à partir de la matière fermentée, une matière fermentée complétée, ladite préparation intermédiaire comprenant une préparation de fruits et / ou de céréales et / ou des additifs tels que des arômes et colorants.

La préparation intermédiaire peut notamment contenir des épaississants (fibres solubles et insolubles, alginates, carraghénanes, gomme xanthane, pectine, amidon, notamment gélatinisé, gomme gélane, cellulose et ses dérivées, gomme de guar et de caroube, inuline) ou des édulcorants (aspartame, acésulfame K, saccharine, sucralose, cyclamate) ou des conservateurs.

Des exemples d'arômes sont : l'arôme pomme, orange, fraise, kiwi, coco...

Des exemples de colorants sont : le beta carotène, le carmin, le rouge de cochenille.

En outre, la préparation de fruits sus-citée peut comprendre des fruits entiers ou en morceaux ou en gelée ou en confiture, permettant par exemple d'obtenir des yaourts aux fruits.

La préparation intermédiaire peut encore contenir des extraits végétaux (soja, riz...).

L'invention concerne également un produit alimentaire fermenté tel qu'obtenu à partir de l'un des procédés tels que définis ci-dessus.

### Exemples

Une carte de tolérance correspondant à l'effet de la température de fermentation en fonction de la quantité de bifidobactéries au départ a été réalisée. Abscisse : quantité de bifidobactéries inoculée en 10⁷ CFU/ml ; ordonnée : température de fermentation en degrés celsius. Noir: quantité de bifidobactéries inférieure à 5.10⁷ CFU/ml; hachures fines : quantité de bifidobactéries comprise entre 5.10⁷ et 10⁸ CFU/ml ; hachures épaisses : quantité de bifidobactéries supérieure à 10⁸ CFU/ml. La mesure est effectuée en fin de fermentation.

Une carte de tolérance correspondant à l'effet de la température de refroidissement des produits avant le stockage final à 10°C en fonction du temps d'attente avant le refroidissement à 20°C a également été réalisée. Abscisse : temps d'attente du lissage (en heures) ; ordonnée : température de refroidissement avant le stockage final (en °C). Hachures fines : quantité de bifidobactéries comprise entre 5.10⁷ et 10⁸ CFU/ml ; hachures épaisses : quantité de bifidobactéries supérieure à 10⁸ CFU/ml. La mesure est effectuée à 35 jours après la fermentation.

Une carte de tolérance correspondant à l'effet de la température de refroidissement des produits avant le stockage final à 10°C en fonction de la température de fermentation a également été réalisée. Abscisse : température de fermentation (°C) ; ordonnée : température de refroidissement lors du stockage final (°C). Noir : quantité de bifidobactéries inférieure à 5.10⁷ CFU/ml ; hachures fines : quantité de bifidobactéries comprise entre 5.10⁷ et 10⁸ CFU/ml ; hachures épaisses : quantité de bifidobactéries supérieure à 10⁸ CFU/ml. La mesure est effectuée à 35 jours après la fermentation.

### Exemple 1

Afin de prouver que les gammes des différents paramètres telles que définies ci-dessus correspondent à une optimisation vis à vis de la survie des bifidobactéries au cours de la conservation, on prépare un yaourt brassé standard en faisant varier chaque facteur indépendamment. Chaque facteur est testé à un niveau bas (noté -1), un niveau moyen (noté 0) et un niveau haut (noté +1). La liste des paramètres testés figure dans le tableau 1 ci-dessous :

**Tableau 1**

| | Facteurs | Niveau bas (-1) | Niveau moyen (0) | Niveau haut (+1) |
|---|---|---|---|---|
| Croissance du bifide | Inoculation de bifidobactéries | 10⁶ CFU /ml | 10⁷ CFU /ml | 5.10'CFU/ml |
| | Temps de fermentation | 6,5 h | 8,25 h | 10 h |
| | Température de fermentation | 36°C | 38°C | 40°C |
| Survie du bifide | Temps d'attente lissage à l'issue de la fermentation | 0,33 h | 1 h | 2,5 h |
| | Température de refroidissement (lissage) | 15°C | 17,5°C | 20°C |
| | Temps de stockage tampon après lissage | 1 h | 12 h | 20 h |
| | Température de conditionnement | 15°C | 17,5°C | 20°C |
| | Température de refroidissement-stockage des produits | 4°C | 7°C | 10°C |

A partir des différentes expérimentations, on corrèle les facteurs et on établit des cartes de tolérance vis à vis de la croissance et de la survie des bifidobactéries, qui correspondent aux projections des quantités de bifidobactéries obtenues pour chaque paramètre.

En particulier on constate que si les produits ne sont pas refroidis suffisamment rapidement (temps d'attente en cuve de fermentation trop élevé), il y a une perte de bifidobactéries. On constate également que si les produits ne sont pas refroidis correctement entre 4°C et 6°C, la perte en bifidobactéries à J+35 est importante.

### Exemple 2

Des essais industriels sont effectués sur 3000 litres.
1^{er} groupe d'essais :
   Témoin 1 : température de fermentation 39°C ; temps de stockage 24 h.
   Témoin 2 : température de fermentation 40°C.
   Essai1 : température de fermentation 37°C, refroidissement 6°C.
   (témoin 1 et témoin 2 : lait + poudre de lait)
2^{ème} groupe d'essais :
   Témoin 3 : température de fermentation 39°C.
   Témoin 4 : température de fermentation 40°C.
   Essai 2 : tous les paramètres sont choisis dans les gammes revendiquées, c'est à dire :
      inoculation de bifidobactéries : 1.10⁷ UFC/ml ;
      temps de fermentation : 9h40 ;
      température de fermentation : 37°C ;
      temps de refroidissement intermédiaire : 1h30 ;
      température de refroidissement intermédiaire : 18°C ;
      temps de stockage tampon après lissage : 12 h ;
      température de refroidissement final : 6°C.
      (témoin 3 et témoin 4 : lait + poudre de lait + préparation de fruits ajoutée en fin de fabrication)

Les résultats sont présentés dans les tableaux 2 et 3 ci-dessous, où est indiquée la population de bifidobactéries en CFU/ml.

**Tableau 2**

| | Fin fermentation | J+1 | J+21 | J+35 |
|---|---|---|---|---|
| Témoin 1 | 1,0.10⁸ | 1,0.10⁸ | 5,0.10⁷ | 3,0.10⁷ |
| Témoin 2 | 3,0.10⁷ | 6,0.10⁷ | 3,0.10⁷ | 3,0.10⁷ |
| Essai 1 | 1,7.10⁸ | 1,7.10⁸ | 2,0.10⁸ | 1,4.10⁸ |

**Tableau 3**

| | Fin fermentation | J+1 | J+35 |
|---|---|---|---|
| Témoin 3 | 1,9.10⁸ | 1,5.10⁸ | 7,0.10⁷ |
| Témoin 4 | 2,0.10⁷ | 2,0.10⁷ | 2,0.10⁷ |
| Essai 2 | 5,0.10⁸ | 3,8.10⁸ | 2,1.10⁸ |

Dans ces tableaux, J correspond à la fin de la fermentation, J+1 correspond à 1 jour de stockage ...

## Revendications

1. Procédé de préparation d'un produit alimentaire fermenté, comportant plus de 5.10⁷, en particulier plus de 10⁸ bifidobactéries par gramme de produit alimentaire fermenté pendant une période de conservation d'au moins 30 jours, en particulier d'au moins 35 jours, à partir d'une matière de départ, comprenant les étapes successives suivantes :
- une étape d'ensemencement d'une matière de départ, éventuellement pasteurisée, par inoculation de ferments d'ensemencement contenant 4.10⁶ à 1.10⁷ bifidobactéries par ml de matière de départ, pour obtenir une matière ensemencée,
- une étape de fermentation de la matière ensemencée obtenue à l'étape précédente, telle que la température de début de fermentation est de 36 à 38°C, la température de fin de fermentation est de 37 à 39°C, et le temps de fermentation est de 8 à 11 heures, pour obtenir une matière fermentée,
- une étape de refroidissement intermédiaire de la matière fermentée obtenue à l'étape précédente, telle que le temps de refroidissement intermédiaire est de 1h30 à 2 heures et la température de refroidissement intermédiaire est de 4 à 18°C, pour obtenir une matière pré-refroidie,
- une étape de stockage de la matière pré-refroidie obtenue à l'étape précédente, telle que le temps de stockage est inférieur à 15 heures, pour obtenir une matière stockée,
- une étape de refroidissement final de la matière stockée obtenue à l'étape précédente, telle que la température de début de refroidissement final est inférieure à 21°C et la température de fin de refroidissement final est de 2 à 6°C, de manière à obtenir un produit alimentaire fermenté.

2. Procédé de préparation d'un produit alimentaire fermenté selon la revendication 1, dans lequel les bifidobactéries sont choisies parmi les bactéries du type *Bifidobacterium animalis,* notamment *Bifidobacterium animalis animalis* et / ou *Bidifobacterium animalis lactis,* et / ou *Bifidobacterium breve* et / ou *Bifidobacterium longum* et / ou *Bifidobacterium infantis* et / ou *Bifidobacterium bifidum*.

3. Procédé de préparation d'un produit alimentaire fermenté selon l'une des revendications 1 ou 2, dans lequel les bifidobactéries sont choisies parmi les bactéries du type *Bifidobacterium animalis.*

4. Procédé de préparation d'un produit alimentaire fermenté selon l'une des revendications 1 à 3, dans lequel le temps de refroidissement intermédiaire est de 1h30.

5. Procédé de préparation d'un produit alimentaire fermenté selon l'une des revendications 1 à 4, dans lequel le temps de stockage est inférieur ou égal à 12 heures, notamment est égal à 12 heures.

6. Procédé selon l'une des revendications 1 à 5, dans lequel la température de fin de refroidissement final est de 4°C.

7. Procédé de préparation d'un produit alimentaire fermenté selon l'une des revendications 1 à 6, dans lequel les ferments d'ensemencement contiennent des bactéries lactiques, en particulier une ou des bactéries du genre *Lactobacillus spp.* et notamment *Lactobacillus delbrueckii bulgaricus* et / ou *Lactobacillus casei* et / ou *Lactobacillus reuteri* et / ou *Lactobacillus acidophilus* et / ou *Lactobacillus helveticus* et / ou *Lactobacillus plantarum*, et / ou des bactéries du type *Lactococcus cremoris* et / ou *Streptococcus thermophilus* et / ou *Lactococcus lactis* et / ou une ou des bactéries du genre *Leuconostoc*.

8. Procédé de préparation d'un produit alimentaire fermenté selon l'une des revendications 1 à 7, dans lequel la proportion des bifidobactéries dans les ferments d'ensemencement est de 20 à 75 %, notamment de 30 à 50 %, notamment de 35 à 40 %, notamment de 37,5 %.

9. Procédé de préparation d'un produit alimentaire fermenté selon l'une des revendications 1 à 8, dans lequel la matière de départ est à base de jus végétal et notamment de jus de fruit ou de jus de légume tel que du jus de soja, ou de produit laitier, constitué en particulier de lait de vache et / ou de lait de chèvre.

10. Procédé de préparation d'un produit alimentaire fermenté selon l'une des revendications 1 à 9, comprenant une étape supplémentaire de brassage entre l'étape de fermentation et l'étape de refroidissement intermédiaire, permettant d'obtenir, à partir de la matière fermentée obtenue à l'étape de fermentation, une matière fermentée brassée.

11. Procédé de préparation d'un produit alimentaire fermenté selon l'une des revendications 1 à 10, comprenant une étape de pasteurisation avant l'étape d'ensemencement, permettant d'obtenir, à partir de la matière de départ, une matière de départ pasteurisée.

12. Procédé de préparation d'un produit alimentaire fermenté selon l'une des revendications 1 à 11, dans lequel la matière de départ pasteurisée est une matière de départ pasteurisée, chambrée, facultativement homogénéisée, et refroidie, obtenue à partir d'une matière brute, ledit procédé comprenant avant l'étape d'ensemencement les étapes successives suivantes :
- une étape de standardisation en matière grasse de la matière brute de manière à obtenir une matière standardisée,
- une étape d'enrichissement en matière sèche de la matière standardisée obtenue à l'étape précédente, de manière à obtenir une matière enrichie,
- une étape de pré-chauffage de la matière enrichie obtenue à l'étape précédente, de manière à obtenir une matière de départ,
- une étape de pasteurisation et de chambrage de la matière de départ obtenue à l'étape précédente, de manière à obtenir une matière pasteurisée et chambrée,
- une étape facultative d'homogénéisation de la matière pasteurisée et chambrée obtenue à l'étape précédente, de manière à obtenir une matière pasteurisée, chambrée et facultativement homogénéisée,
- une étape de refroidissement initial de la matière pasteurisée, chambrée et facultativement homogénéisée obtenue à l'étape précédente, de manière à obtenir une matière de départ pasteurisée, chambrée, facultativement homogénéisée, et refroidie.

13. Procédé de préparation d'un produit alimentaire fermenté selon l'une des revendications 1 à 12, comprenant après l'étape de refroidissement final une étape de conservation du produit alimentaire fermenté à une température comprise entre 4 et 10 °C.

14. Procédé de préparation d'un produit alimentaire fermenté selon l'une des revendications 1 à 13, comprenant une étape d'ajout d'une préparation intermédiaire simultanément à l'étape d'ensemencement ou entre l'étape d'ensemencement et l'étape de fermentation, de manière à obtenir, à partir de la matière ensemencée, une matière ensemencée complétée, ou après l'étape de fermentation, de manière à obtenir, à partir de la matière fermentée, une matière fermentée complétée, ladite préparation intermédiaire comprenant une préparation de fruits et / ou de céréales et / ou des additifs tels que des arômes et colorants.

## Patentansprüche

1. Verfahren zur Herstellung eines fermentierten Lebensmittelproduktes, umfassend mehr als 5.10⁷, insbesondere mehr als 10⁸ Bifidobakterien pro Gramm fermentierten Lebensmittelproduktes während einer Konservierungszeit von mindestens 30 Tagen, insbesondere mindestens 35 Tagen, ausgehend von einem Ausgangsmaterial, umfassend die folgenden aufeinanderfolgenden Schritte:
- einen Schritt des Einimpfens eines eventuell pasteurisierten Ausgangsmaterials durch Impfelemente, die 4.10⁶ bis 1.10⁷ Bifidobakterien pro ml Ausgangsmaterial enthalten, um eine Impfmaterial zu erhalten,
- einen Schritt der Fermentation des Impfmaterials, das in dem vorherigen Schritt erhalten wurde, so dass die Anfangs-Fermentationstemperatur 36 bis 38°C beträgt, die End-Fermentationstemperatur 37 bis 39°C beträgt, und die Fermentationszeit 8 bis 11 Stunden beträgt, um ein fermentiertes Material zu erhalten,
- einen Schritt des Zwischenkühlens des fermentierten Materials, das in dem vorherigen Schritt erhalten wurde, so dass die Zwischenkühlzeit 1h30 bis 2 Stunden beträgt, und die Zwischenkühltemperatur 4 bis 18°C beträgt, um ein vorgekühltes Material zu erhalten,
- einen Schritt der Lagerung des vorgekühlten Materials, das in dem vorherigen Schritt erhalten wurde, so dass die Lagerzeit kürzer als 15 Stunden ist, um ein Lagermaterial zu erhalten,
- einen Schritt des Endkühlens des Lagermaterials, das in dem vorhergehenden Schritt erhalten wurde, so dass die Anfangstemperatur des Endkühlens niedriger als 21°C ist und die Endtemperatur des Endkühlens 2 bis 6°C beträgt, um ein fermentiertes Lebensmittelprodukt zu erhalten.

2. Verfahren zur Herstellung eines fermentierten Lebensmittelproduktes nach Anspruch 1 bei dem die Bifidobakterien unter den Bakterien des Typs *Bifidobacterium animalis,* insbesondere *Bifidobacterium animalis animalis* und/oder *Bifidobacterium animalis lactis,* und/oder *Bifidobacterium breve* und/oder *Bifidobacterium longum* und/oder *Bifidobacterium infantis* und/oder *Bifidobacterium bifidum* ausgewählt sind.

3. Verfahren zur Herstellung eines fermentierten Lebensmittelproduktes nach einem der Ansprüche 1 oder 2, bei dem die Bifidobakterien unter den Bakterien des Typs *Bifidobacterium animalis* ausgewählt sind.

4. Verfahren zur Herstellung eines fermentierten Lebensmittelproduktes nach einem der Ansprüche 1 bis 3, bei dem die Zwischenkühlzeit 1h30 beträgt.

5. Verfahren zur Herstellung eines fermentierten Lebensmittelproduktes nach einem der Ansprüche 1 bis 4, bei dem die Lagerzeit kürzer oder gleich 12 Stunden, insbesondere gleich 12 Stunden ist.

6. Verfahren nach einem der Ansprüche 1 bis 5, bei dem die Endkühltemperatur 4°C beträgt.

7. Verfahren zur Herstellung eines fermentierten Lebensmittelproduktes nach einem der Ansprüche 1 bis 6, bei dem die Impffermente Milchsäurebakterien enthalten, insbesondere ein oder mehrere Bakterien der Art *Lactobacillus spp.* und insbesondere *Lactobacillus delbrueckii bulgaricus* und/oder *Lactobacillus casei* und/oder *Lactobacillus reuteri* und/oder *Lactobacillus acidophilus* und/oder *Lactobacillus helveticus* und/oder *Lactobacillus plantarum* und/oder Bakterien des Typs *Lactococcus cremoris* und/oder *Streptococcus thermophilus* und/oder *Lactococcus lactis* und/oder ein oder mehrere Bakterien der Art *Leuconostoc.*

8. Verfahren zur Herstellung eines fermentierten Lebensmittelproduktes nach einem der Ansprüche 1 bis 7, bei dem der Anteil der Bifidobakterien in den Impffermenten 20 bis 75%, insbesondere 30 bis 50%, insbesondere 35 bis 40%, insbesondere 37,5% beträgt.

9. Verfahren zur Herstellung eines fermentierten Lebensmittelproduktes nach einem der Ansprüche 1 bis 8, bei dem das Ausgangsmaterial auf Basis eines Pflanzensaftes ist, und insbesondere eines Fruchtsaftes oder Gemüsesaftes, wie Sojasaft, oder eines Milchproduktes, das insbesondere aus Kuhmilch und/oder Ziegenmilch besteht.

10. Verfahren zur Herstellung eines fermentierten Lebensmittelproduktes, nach einem der Ansprüche 1 bis 9, umfassend einen zusätzlichen Schritt des Durchmischens zwischen dem Fermentationsschritt und dem Zwischenkühlschritt umfasst, der es ermöglicht, aus dem fermentierten Material, das in dem Fermentationsschritt erhalten wurde, ein durchgemischtes fermentiertes Material zu erhalten.

11. Verfahren zur Herstellung eines fermentierten Lebensmittelproduktes nach einem der Ansprüche 1 bis 10, umfassend einen Schritt der Pasteurisierung vor dem Schritt des Einimpfens, der es ermöglicht, aus dem Ausgangsmaterial ein pasteurisiertes Ausgangsmaterial zu erhalten.

12. Verfahren zur Herstellung eines fermentierten Lebensmittelproduktes nach einem der Ansprüche 1 bis 11, bei dem das pasteurisierte Ausgangsmaterial ein pasteurisiertes, temperiertes, fakultativ homogenisiertes und gekühltes Ausgangsmaterial ist, das aus einem Rohmaterial erhalten wird, wobei das Verfahren vor dem Schritt des Einimpfens die folgenden aufeinanderfolgenden Schritte umfasst:
- einen Schritt der Standardisierung des Fettgehalts des Rohmaterials, um ein standardisiertes Material zu erhalten,
- einen Schritt der Anreicherung des standardisierten Materials, das in dem vorherigen Schritt erhalten wurde, mit Trockenmaterial, um ein angereichertes Material zu erhalten,
- einen Schritt der Vorerhitzung des angereicherten Materials, das in dem vorherigen Schritt erhalten wurde, um ein Ausgangsmaterial zu erhalten,
- einen Schritt der Pasteurisierung und Temperierung des Ausgangsmaterials, das in dem vorherigen Schritt erhalten wurde, um ein pasteurisiertes und temperiertes Material zu erhalten,
- einen fakultativen Schritt der Homogenisierung des pasteurisierten und temperierten Materials, das in dem vorherigen Schritt erhalten wurde, um ein pasteurisiertes, temperiertes und fakultativ homogenisiertes Material zu erhalten,
- einen Schritt des anfänglichen Kühlens des pasteurisierten, temperierten und fakultativ homogenisierten Materials, das in dem vorhergehenden Schritt erhalten wurde, um ein pasteurisiertes, temperiertes, fakultativ homogenisiertes und gekühltes Ausgangsmaterial zu erhalten.

13. Verfahren zur Herstellung eines fermentierten Lebensmittelproduktes nach einem der Ansprüche 1 bis 12, umfassend nach dem Schritt des Endkühlens einen Schritt der Konservierung des fermentierten Lebensmittelproduktes bei einer Temperatur zwischen 4 und 10°C.

14. Verfahren zur Herstellung eines fermentierten Lebensmittelproduktes nach einem der Ansprüche 1 bis 13, umfassend einen Schritt der Hinzufügung eines Zwischenpräparats gleichzeitig mit dem Schritt des Einimpfens oder zwischen dem Schritt des Einimpfens und dem Fermentationsschritt, um aus dem Impfmaterial ein ergänztes Impfmaterial zu erhalten, oder nach dem Fermentationsschritt, um aus dem fermentierten Material ein ergänztes fermentiertes Material zu erhalten, wobei das Zwischenpräparat ein Präparat aus Früchten und/oder Cerealien und/oder Zusatzstoffen, wie Aromen und Farbstoffen, umfasst.

## Claims

1. A process for the preparation of a fermented food product, comprising more than 5.10⁷, in particular more than 10⁸ bifidobacteria per gram of fermented food product for a preservation period of at least 30 days, in particular of at least 35 days, from a starting substance comprising the following successive stages :
- a stage of seeding of a starting substance, optionally pasteurized, by inoculation with seeding ferments containing 4.10⁶ to 1.10⁷ bifidobacteria per ml of starting substance, in order to obtain a seeded substance,
- a stage of fermentation of the seeded substance obtained in the preceding stage, such that the temperature at the start of fermentation is 36 to 38°C, the temperature at the end of fermentation is 37 to 39°C, and the fermentation time is 8 to 11 hours, in order to obtain a fermented substance,
- a stage of intermediate cooling of the fermented substance obtained in the preceding stage, such that the intermediate cooling time is 1h30 to 2 hours and the intermediate cooling temperature is 4 to 18°C, in order to obtain a pre-cooled substance,
- a stage of storage of the pre-cooled substance obtained in the preceding stage, such that the storage time is less than 15 hours, in order to obtain a stored substance,
- a stage of a final cooling of the stored substance obtained in the preceding stage, such that the temperature at the start of the final cooling is less than 21°C and the temperature at the end of the final cooling is 2 to 6°C, in order to obtain a fermented food product.

2. The process for the preparation of a fermented food product according to claim 1, in which the bifidobacteria are selected from bacteria of the type *Bifidobactorium animalis,* especially *Bifidobacterium animalis animalis* and/or *Bifidobacterium animalis lactis,* and/or *Bifidobacterium breve* and/or *Bifidobacterium longum* and/or *Bifidobacterium infantis* and/or *Bifidobacterium bifidum.*

3. The process for the preparation of a fermented food product according to one of claims 1 or 2, in which the bifidobacteria are chosen from bacteria of the type *Bifidobacterium animalis.*

4. The process for the preparation of a fermented food product, according to one of claims 1 to 3, in which the intermediate cooling time is 1h30.

5. The process for the preparation of a fermented food product according to one of claims 1 to 4, in which the storage time is less than or equal to 12 hours, especially equal to 12 hours.

6. The process according to one of claims 1 to 5, in which the temperature at the end of the final cooling is 4°C.

7. The process for the preparation of a fermented food product according to one of claims 1 to 6, in which the seeding ferments contain lactic bacteria, in particular one or more bacteria of the genus *Lactobacillus spp.* and especially *Lactobacillus delbrueckii bulgaricus* and/or *Lactobacillus casei* and/or *Lactobacillus reuteri* and/or *Lactobacillus acidophilus* and/or *Lactobacillus helveticus* and/or *Lactobacillus plantarum,* and/or bacteria of the type *Lactococcus cremoris* and/or *Streptococcus thermophilis* and/or *Lactococcus lactis* and/or one or more bacteria of the genus *Leuconostoc.*

8. The process for the preparation of a fermented food product according to one of claims 1 to 7, in which the proportion of bifidobacteria in the seeding ferments is 20 to 75%, notably 30 to 50 % especially 35 to 40%, especially 37.5%.

9. The process for the preparation of a fermented food product according to one of claims 1 to 8, in which the start substance is based on plant juice and especially on fruit juice or vegetable juice such as soy juice, or dairy product, constituted in particular by cow's milk and/or goat's milk.

10. The process for the preparation of a fermented food product according to one of claims 1 to 9, comprising an additional stirring stage between the fermentation stage and the intermediate cooling stage, making it possible to obtain, from the fermented substance obtained at the fermentation stage, a stirred fermented substance.

11. The process for the preparation of a fermented food product according to one of claims 1 to 10, comprising a pasteurization stage before the seeding stage, making it possible to obtain, from the starting substance, a pasteurized starting substance.

12. The process for the preparation of a fermented food product according to one of claims 1 to 11, in which the pasteurized starting substance is a pasteurized starting substance which is held, optionally homogenized, and cooled down, obtained from a raw material, said process comprising, before the seeding stage, the following successive stages :
- a stage of standardization of fatty substances of the raw material so as to obtain a standardized substance,
- a stage of enrichment with dried matter of the standardized substance obtained in the preceding stage, so as to obtain an enriched substance,
- a stage of pre-heating of the enriched substance obtained in the preceding stage, so as to obtain a starting substance,
- a stage of pasteurization and holding of the starting substance obtained in the preceding stage, so as to obtain a pasteurized and held substance,
- an optional stage of homogenization of the pasteurized and held substance obtained in the preceding stage, so as to obtain a pasteurized, held and optionally homogenized substance,
- a stage of initial cooling of the pasteurized, held and optionally homogenized substance obtained in the preceding stage, so as to obtain a pasteurized starting substance, held, optionally homogenized and cooled down.

13. The process for the preparation of a fermented food product according to one of claims 1 to 12, comprising after the final cooling stage, a stage of preservation of the fermented food product at a temperature comprised between 4 to 10°C.

14. The process for the preparation of a fermented food product according to one of claims 1 to 13, comprising a stage of addition of an intermediate preparation simultaneously with the seeding stage or between the seeding stage and the fermentation stage, so as to obtain, from the seeded substance, a completed seeded substance, or after the fermentation stage, so as to obtain, from the fermented substance, a completed fermented substance, said intermediate preparation comprising a preparation of fruits and/or cereals and/or additives such as flavourings and colourings.
